# EUROPEAN PATENT APPLICATION

(11) **EP 4 742 385 A1**
(43) Date of publication of application: **13.05.2026**
(21) Application number: 24835378.1
(22) Date of filing: 03.07.2024
(51) Int. Cl.: H01M 50/136, H01M 50/107, H01M 50/152, H01M 50/531, H01M 10/04, H01M 10/0525

(54) **BATTERY AND BATTERY PACK**

(30) Priority: 03.07.2023 CN 202310806634
(71) Applicant: SVOLT Energy Technology Co., Ltd., Changzhou, Jiangsu 213200 (CN)
(72) Inventor: YUAN, Yue, hangzhou, Jiangsu 213200 (CN); JIANG, Zhen, hangzhou, Jiangsu 213200 (CN); YAN, Huailei, hangzhou, Jiangsu 213200 (CN); GONG, Weihong, hangzhou, Jiangsu 213200 (CN)
(74) Representative: Michalski Hüttermann & Partner Patentanwälte mbB
(86) International application number: PCT/CN2024/103411
(87) International publication number: WO 2025/007898

(57) **Abstract**

The present application relates to the technical field of batteries, and discloses a battery and a battery pack. The battery includes a shell, an electrode set, and a negative electrode cover plate. The shell includes a bottom wall located at one end, and the bottom wall includes a bottom wall body and an elastic rib surface recessed inward from the bottom wall body; the electrode set is arranged in the shell, the electrode set is electrically connected to at least a portion of the elastic rib surface, and the elastic rib surface is suitable for elastic deformation along a height direction of the electrode set; the negative electrode cover plate is arranged on the elastic rib surface, and the electrode cover plate is connected to the shell. When the electrode set has a large manufacturing error in height, the elastic rib surface can compensate for the height of the electrode set to compensate for low height accuracy of the electrode set, thereby increasing product processing flexibility and improving product yield and performance. The electrode set is electrically connected to at least a portion of the elastic rib surface, thereby canceling a negative electrode connecting piece, reducing the quantity of components, greatly lowering product costs, simplifying an assembly process, and improving production efficiency, and achieving high market competitiveness.

## Description

### CROSS REFERENCE TO RELATED APPLICATION

The present application claims priority to Chinese Patent Application No. 202310806634.5 filed with the China National Intellectual Property Administration on July 3, 2023, and entitled "BATTERY AND BATTERY PACK", which is incorporated herein by reference in entirety.

### TECHNICAL FIELD

The present application relates to the technical field of batteries, and specifically relates to a battery and a battery pack.

### BACKGROUND ART

With the increasing maturity of lithium-ion battery technology, power batteries, as a new type of batteries, are widely used in electric vehicles, and the performance and safety requirements for these batteries continue to rise.

Electrode structures of cylindrical batteries currently on the market include components such as an upper plastic component, a lower plastic component, an electrode terminal, a sealing ring, a positive electrode connecting piece, a negative electrode connecting piece, a negative electrode cover plate, a sealing cover plate, and a sealing nail. The existing electrode structures have the following disadvantages: a large number of components lead to high cost and a complex assembly process; especially numerous welding steps are highly prone to poor performance and quality problems; and low manufacturing accuracy in a height direction of an electrode set results in low battery yield.

### SUMMARY

In view of this, the present application provides a battery and a battery pack to solve at least one of the following technical problems: numerous battery components, high cost, complex assembly process, low production efficiency, and low yield.

In a first aspect, the present application provides a battery, including a shell, an electrode set, and a negative electrode cover plate. The shell includes a bottom wall located at one end, and the bottom wall includes a bottom wall body and an elastic rib surface recessed inward from the bottom wall body; the electrode set is arranged in the shell, the electrode set is electrically connected to at least a portion of the elastic rib surface, and the elastic rib surface is suitable for elastic deformation along a height direction of the electrode set; the negative electrode cover plate is arranged on the elastic rib surface, and the electrode cover plate is connected to the shell.

According to the battery provided in the present application, since the elastic rib surface provided on the bottom wall of the shell can provide support for the electrode set, when the electrode set has a large manufacturing error in height, the elastic rib surface can compensate for the height of the electrode set to compensate for low height accuracy of the electrode set, thereby increasing product processing flexibility and improving product yield and performance. The elastic rib surface is recessed, and the electrode set is electrically connected to at least a portion of the elastic rib surface, thereby canceling a negative electrode connecting piece, reducing the quantity of components, greatly lowering product costs, simplifying an assembly process, improving production efficiency, and achieving high market competitiveness.

In an optional implementation, the elastic rib surface includes at least two welding zones and at least two isolation zones, the welding zones and the isolation zones are alternately arranged around a center of the electrode set, and the welding zones are welded to the electrode set in a penetrating manner.

Such design ensures that the elastic rib surface has sufficient elasticity, improves the performance of compensating for the height manufacturing accuracy of the electrode set by the elastic rib surface, and ensures stable battery performance.

In an optional implementation, a ratio of an area of the welding zones to an area of a bottom surface of the electrode set is not less than 2/5.

When the ratio of the area of the welding zones to the area of the bottom surface of the electrode set is controlled within a range of not less than 2/5, a current-carrying capacity can be ensured. When the ratio exceeds this range, the welding area is small, the welding performance is reduced, and the stable battery performance will be affected. Preferably, the ratio of the area of the welding zones to the area of the bottom surface of the electrode set is 1/2.

In an optional implementation, the isolation zones are through holes that penetrate through the elastic rib surface.

The through holes are simple, easy to process, and beneficial to improving battery production efficiency.

In an optional implementation, the shell is cylindrical, the elastic rib surface is annular, the welding zones are sector-shaped zones centered on the elastic rib surface, and the welding zones are uniformly spaced around the center of the elastic rib surface.

Such design ensures that the electrode set and the elastic rib surface are welded radially from the inside out, increasing the welding area and improving welding performance and effectiveness.

In an optional implementation, a deformation range of the elastic rib surface along the height direction of the electrode set is -0.3 mm to 0.3 mm.

Controlling the travel of deformation of the elastic rib surface within the range of -0.3 mm to 0.3 mm can compensate for the manufacturing accuracy error of the electrode set in the height direction, ensuring stable battery performance. When the travel of deformation exceeds this range, the structural strength of the elastic rib surface will be affected.

In an optional implementation, the elastic rib surface and the bottom wall of the shell are integrally formed.

The elastic rib surface and the shell are made of a same material and integrally formed, facilitating processing, simplifying a battery assembly process, and improving battery production efficiency.

In an optional implementation, the battery further includes a positive electrode cover plate, the positive electrode cover plate includes a positive electrode cover plate body and a recessed portion located in the middle of the positive electrode cover plate body and facing towards the electrode set, a periphery of the positive electrode cover plate body is welded to a periphery of the other end of the shell, the recessed portion is provided with a mounting hole, an electrode terminal is connected to the mounting hole through an insulating seal, and the electrode terminal is electrically connected to a positive electrode of the electrode set.

Compared to existing independent sealing and insulating members, the battery in the embodiments of the present application integrates a sealing member and an insulating member into a single structural member, which not only improves the sealing and insulating performance, but also reduces the quantity of components, simplifies the assembly process, greatly lowers battery costs, and improves product competitiveness.

In an optional implementation, the positive electrode cover plate further includes a raised portion away from the electrode set, the raised portion is arranged around the recessed portion, an inner ring of the raised portion is connected to the recessed portion, and an outer ring of the raised portion is connected to the positive electrode cover plate body; the raised portion is provided with an explosion-proof valve, and the negative electrode cover plate is provided with an injection hole.

The explosion-proof valve is arranged on the raised portion, and the injection hole is arranged on the negative electrode cover plate, that is, the explosion-proof valve and the injection hole are separately arranged on different end surfaces. When the explosion-proof valve leads to electrolyte leakage due to breakdown, contamination of the injection hole can be avoided, thereby improving product assembly yield and lowering product costs.

In a second aspect, the present application further provides a battery pack, including the battery in any one of the above technical solutions.

The battery pack including the aforementioned battery has the same effect as the battery. Details will not be repeated here.

### BRIEF DESCRIPTION OF DRAWINGS

To describe the technical solutions in the embodiments of the present application or in the prior art more clearly, the following briefly describes the accompanying drawings required for describing the specific embodiments or the prior art. Apparently, the accompanying drawings in the following description show merely some embodiments of the present application, and a person of ordinary skill in the art can still derive other drawings from these drawings without inventive efforts.
FIG. 1 is a perspective view of a shell and a negative electrode cover plate of a battery after assembly according to an embodiment of the present application;
FIG. 2 is a top view of the battery shown in FIG. 1;
FIG. 3 is a cross-sectional view taken along line A-A in FIG. 1;
FIG. 4 is a partially enlarged schematic diagram of part B in FIG. 3;
FIG. 5 is a schematic structural diagram of a shell;
FIG. 6 is a top view of FIG. 5;
FIG. 7 is a schematic structural diagram of a positive electrode cover plate of a battery according to an embodiment of the present application;
FIG. 8 is a top view of FIG. 7;
FIG. 9 is a cross-sectional view taken along line C-C in FIG. 8;
FIG. 10 is a partially enlarged schematic diagram of part D in FIG. 9;
FIG. 11 is a perspective view of a battery according to an embodiment of the present application;
FIG. 12 is a cross-sectional view of FIG. 11;
FIG. 13 is a partially enlarged schematic diagram of a positive terminal in FIG. 12; and
FIG. 14 is a partially enlarged schematic diagram of a negative terminal in FIG. 12.

### Reference numerals:

1. Shell; 101. Bottom wall; 102. Elastic rib surface; 1021. Welding zone; 1022. Isolation zone; 2. Electrode set; 3. Negative electrode cover plate; 301. Negative electrode cover plate body; 302. Convex edge; 4. Positive electrode cover plate; 401. Positive electrode cover plate body; 402. Recessed portion; 403. Raised portion; 5. Explosion-proof valve; 6. Injection hole; 7. Electrode terminal; 701. Electrode terminal body; 702. First protruding edge; 703. Second protruding edge; 8. Insulating seal; 801. First sealing segment; 802. Second sealing segment; 803. Third sealing segment; 9. Positive electrode connecting piece.

### DETAILED DESCRIPTION OF EMBODIMENTS

In order to make the objectives, technical solutions, and advantages of the embodiments of the present application clearer, the technical solutions in the embodiments of the present application will be clearly and completely described below in conjunction with the accompanying drawings in the embodiments of the present application. Apparently, the described embodiments are merely some of the embodiments of the present application, not all of them. On the basis of the embodiments in the present application, all other embodiments obtained by those skilled in the art without inventive efforts shall fall within the scope of protection of the present application.

In the prior art, an electrode structure of a cylindrical battery includes components such as an upper plastic component, a lower plastic component, an electrode terminal, a sealing ring, a positive electrode connecting piece, a negative electrode connecting piece, a negative electrode cover plate, a sealing cover plate, and a sealing nail, where the positive electrode connecting piece and an electrode set, the positive electrode connecting piece and the electrode terminal, the negative electrode connecting piece and a shell, as well as the negative electrode cover plate and the shell, are all connected by welding; after the electrode terminal is assembled into the shell, the upper plastic component, the lower plastic component, and the sealing ring are compacted by riveting to achieve a sealing and insulating effect; and after the electrode set is assembled into the shell, a negative electrode is laser-welded to the negative electrode connecting piece, the negative electrode connecting piece is then laser-welded to the shell, the negative electrode cover plate is laser-welded to the shell, and the sealing cover plate is laser-welded to the negative electrode cover plate after electrolyte injection.

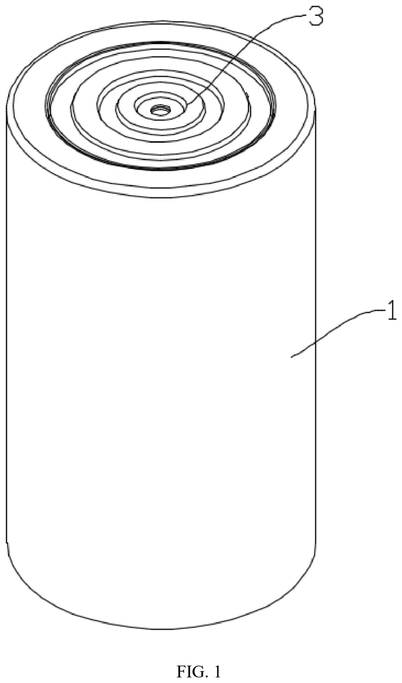

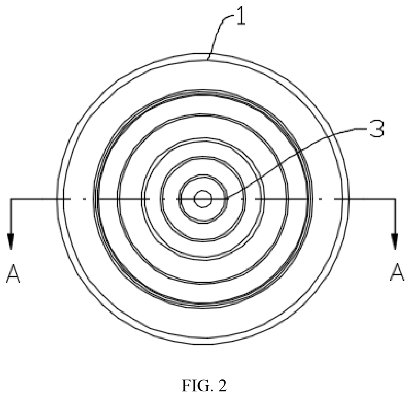

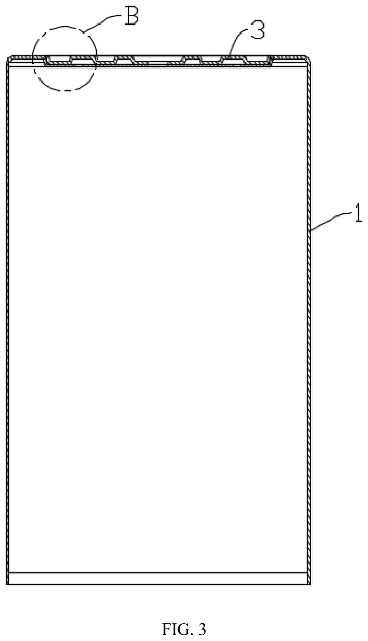

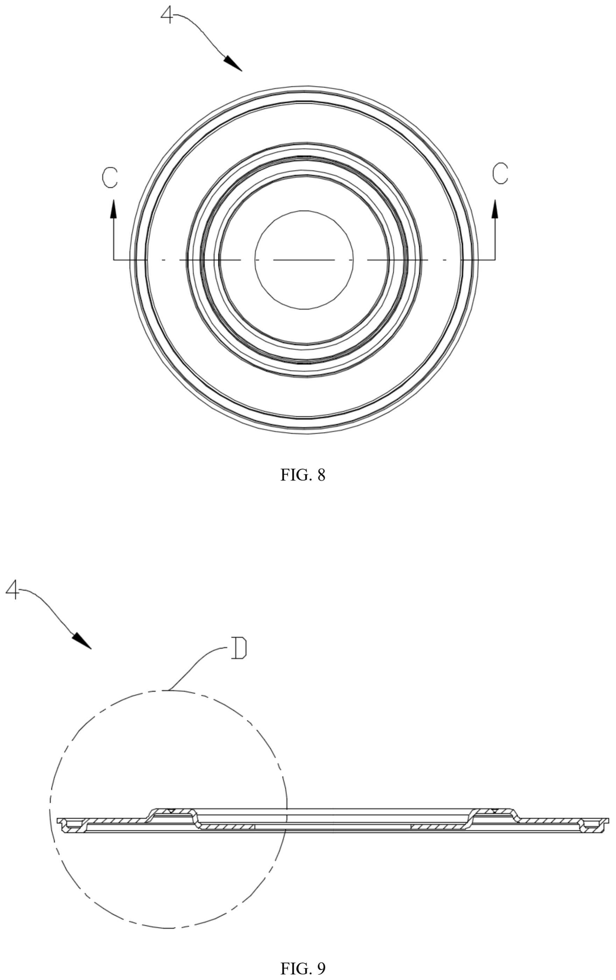

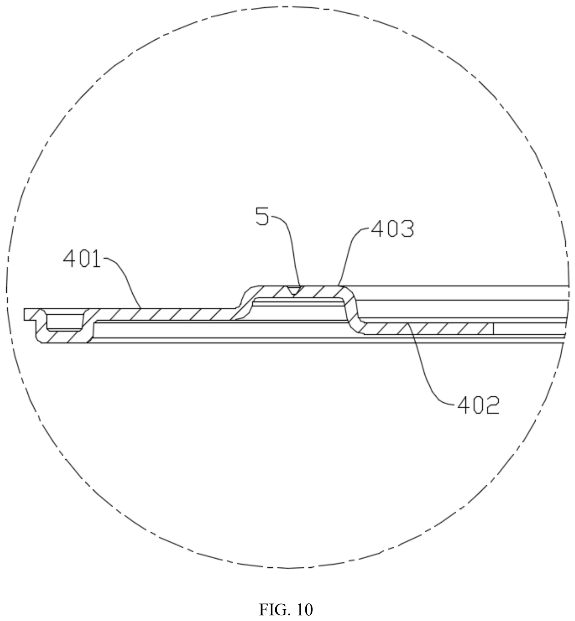

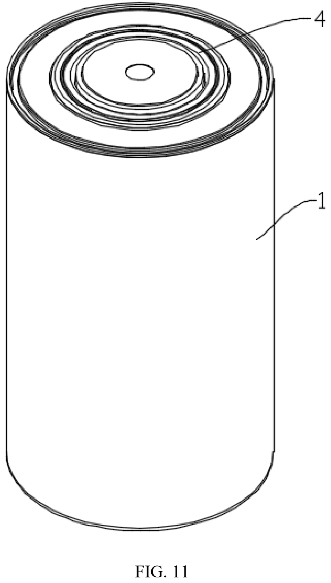

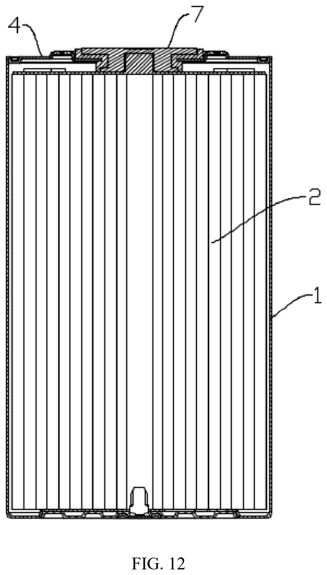

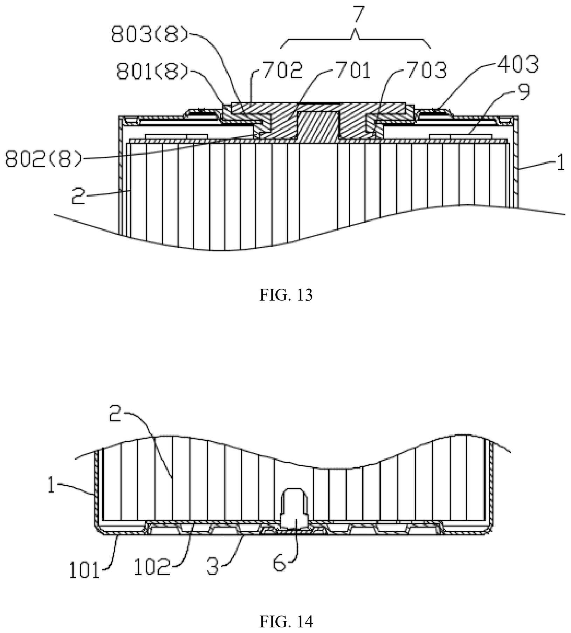

Hereinafter, the embodiments of the present application will be described in conjunction with FIG. 1 to FIG. 14.

According to the embodiments of the present application, in one aspect, a battery is provided, including a shell 1, an electrode set 2, and a negative electrode cover plate 3. The shell 1 includes a bottom wall 101 located at one end, and the bottom wall 101 includes a bottom wall body and an elastic rib surface 102 recessed inward from the bottom wall body; the electrode set 2 is arranged in the shell 1, the electrode set 2 is electrically connected to at least a portion of the elastic rib surface 102, and the elastic rib surface 102 is suitable for elastic deformation along a height direction of the electrode set 2; the negative electrode cover plate 3 is arranged on the elastic rib surface 102, and the electrode cover plate 3 is connected to the shell 1.

According to the battery provided in the present application, since the elastic rib surface 102 provided on the bottom wall 101 of the shell 1 can provide support for the electrode set 2, when the electrode set 2 has a large manufacturing error in height, the elastic rib surface 102 can compensate for the height of the electrode set 2 to compensate for low height accuracy of the electrode set 2, thereby increasing product processing flexibility and improving product yield and performance. The elastic rib surface 102 is recessed, and the electrode set 2 is electrically connected to at least a portion of the elastic rib surface 102, thereby canceling a negative electrode connecting piece, reducing the quantity of components, greatly lowering product costs, simplifying an assembly process, improving production efficiency, and achieving high market competitiveness.

The manufacturing error of the electrode set 2 in height is ±0.3 mm, and the elastic rib surface 102 is designed to have elastic deformation along the height direction of the electrode set 2, so as compensate for the manufacturing error of the electrode set 2 in the height direction. For example, when the error of the electrode set 2 in the height direction is -0.3 mm, the elastic rib surface 102 deforms 0.3 mm close to the electrode set 2, so that the elastic rib surface 102 is tightly welded to the electrode set 2. Otherwise, there is a clearance between the elastic rib surface 102 and the electrode set 2, and over-sized welding or weak welding easily occurs, resulting in weak connection between the negative electrode cover plate 3 and the electrode set 2 and highly poor contact. When the error of the electrode set 2 in the height direction is 0.3 mm, the elastic rib surface 102 deforms 0.3 mm away from the electrode set 2, ensuring the welding performance between the electrode set 2 and the negative electrode cover plate 3.

In addition, because a negative terminal of the battery has only a two-layer structure of the bottom wall of the shell and the negative electrode cover plate, compared to multi-layer negative electrode cover plates in the prior art, the quantity of components is decreased and the assembly process is simplified.

Specifically, the structure of the shell 1 may be cylindrical, suitable for cylindrical batteries, or cubic, suitable for square batteries. This embodiment takes a cylindrical battery as an example, referring to FIG. 1, the shell 1 includes a cylindrical shell body, and the shell body has a cavity for accommodating the electrode set 2. The bottom wall 101 of the shell 1 is located at one end of the shell body.

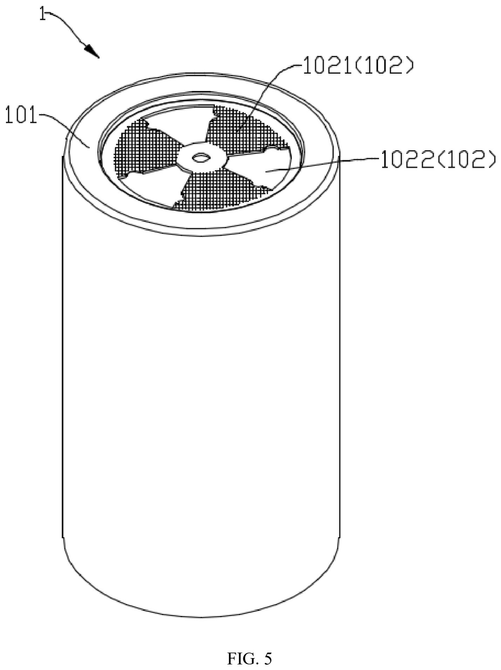

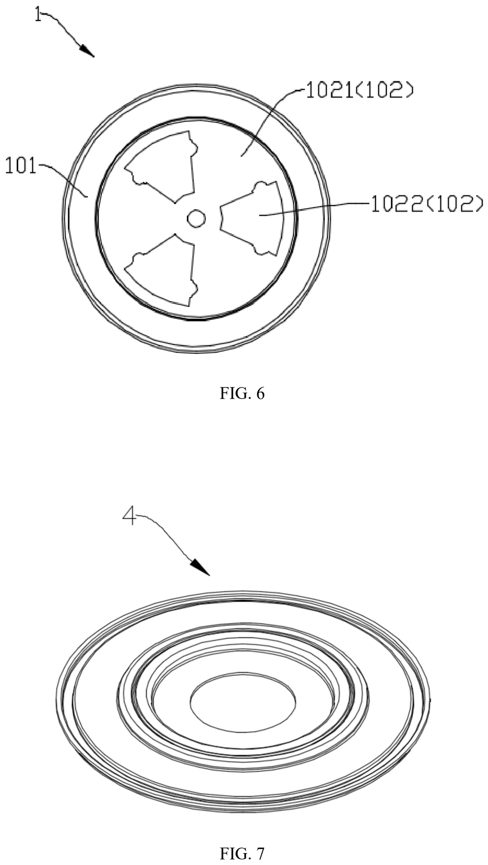

In an optional implementation, as shown in FIG. 5 and FIG. 6, the elastic rib surface 102 includes at least two welding zones 1021 and at least two isolation zones 1022, the welding zones 1021 and the isolation zones 1022 are alternately arranged around a center of the electrode set 2, and the welding zones 1021 are welded to the electrode set 2 in a penetrating manner. Specifically, in this embodiment, three welding zones 1021 and three isolation zones 1022 are designed. The three welding zones 1021 and the three isolation zones 1022 are alternately arranged around the center of the electrode set 2.

Such design ensures that the elastic rib surface 102 has sufficient elasticity, improves the performance of compensating for the height manufacturing accuracy of the electrode set 2 by the elastic rib surface 102, and ensures stable battery performance.

In an optional implementation, a ratio of an area of the welding zones 1021 to an area of a bottom surface of the electrode set 2 is not less than 2/5.

Specifically, the structure of the electrode set 2 is adapted to the structure of the shell 1. In this embodiment, the electrode set 2 is cylindrical. Two ends of the electrode set 2 are respectively a positive terminal and a negative terminal, and end surfaces of the two ends of the electrode set 2 are bottom surfaces of the electrode set 2. The area of the bottom surface of the electrode set 2 is an area of any end surface of the electrode set 2.

When the ratio of the area of the welding zones 1021 to the area of the bottom surface of the electrode set 2 is controlled within a range of not less than 2/5, a current-carrying capacity can be ensured. When the ratio exceeds this range, the welding area is small, the welding performance is reduced, and the stable battery performance will be affected. Preferably, the ratio of the area of the welding zones 1021 to the area of the bottom surface of the electrode set 2 is 1/2.

In an optional implementation, the isolation zones 1022 are through holes that penetrate through the elastic rib surface 102.

The through holes are simple, easy to process, and beneficial to improving battery production efficiency. In some other embodiments, the isolation zones 1022 may be thinned zones, that is, the thickness of the isolation zones 1022 is less than the thickness of the welding zones 1021.

In an optional implementation, the shell 1 is cylindrical, the elastic rib surface 102 is annular, the welding zones 1021 are sector-shaped zones centered on the elastic rib surface 102, and the welding zones 1021 are uniformly spaced around the center of the elastic rib surface 102.

Such design ensures that the electrode set 2 and the elastic rib surface 102 are welded radially from the inside out, increasing the welding area and improving welding performance and effectiveness.

In an optional implementation, a deformation range of the elastic rib surface 102 along the height direction of the electrode set 2 is -0.3 mm to 0.3 mm. Specifically, taking a plane parallel to the bottom surface of the electrode set 2 as a reference plane, the travel of deformation of the elastic rib surface 102 towards a side close to the electrode set 2 is defined as negative, while the travel of formation of the elastic rib surface 102 towards a side away from the electrode set 2 is defined as positive. That is, the deformation range of the elastic rib surface 102 along the height direction of the electrode set 2 is -0.3 mm to 0.3 mm, or relative to the reference plane, the deformation range of the elastic rib surface 102 is 0.3 mm upward or downward.

Controlling the travel of deformation of the elastic rib surface 102 within the range of - 0.3 mm to 0.3 mm can compensate for the manufacturing accuracy error of the electrode set 2 in the height direction, ensuring stable battery performance. When the travel of deformation exceeds this range, the structural strength of the elastic rib surface 102 will be affected.

In an optional implementation, the elastic rib surface 102 and the bottom wall 101 of the shell 1 are integrally formed.

The elastic rib surface 102 and the shell 1 are made of a same material and integrally formed, facilitating processing, simplifying a battery assembly process, and improving battery production efficiency.

In an optional implementation, as shown in FIG. 1 to FIG. 4, the negative electrode cover plate 3 includes a negative electrode cover plate body 301 and a plurality of convex edges 302 provided on the negative electrode cover plate body 301. Specifically, in this embodiment, the negative electrode cover plate body 301 is circular, and the convex edges 302 are annular around the negative electrode cover plate body 301.

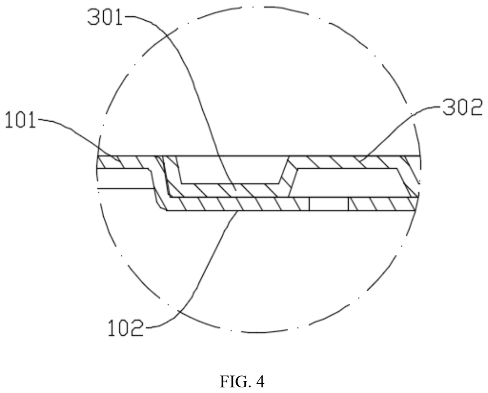

Such design can increase the structural strength of the negative electrode cover plate 3, making it less prone to deformation and improving battery stability. Specifically, as shown in FIG. 4, the elastic rib surface 102 is provided on the bottom wall 101 of the shell 1, and the elastic rib surface 102 is recessed in the bottom wall 101 of the shell 1, so a groove is formed on the bottom wall 101 of the shell 1, where the negative electrode cover plate 3 is arranged in the groove. The negative electrode cover plate body 301 abuts against the elastic rib surface 102, and an annular cavity is formed between the convex edges 302 and the elastic rib surface 102. In some other implementations, as shown in FIG. 4, an upper surface of the convex edge 302 is flush with an upper surface of the bottom wall 101 of the shell 1.

In an optional implementation, the battery further includes a positive electrode cover plate 4, as shown in FIG. 7 to FIG. 10, the positive electrode cover plate 4 includes a positive electrode cover plate body 401 and a recessed portion 402 located in the middle of the positive electrode cover plate body 401 and facing towards the electrode set 2, a periphery of the positive electrode cover plate body 401 is welded to a periphery of the other end of the shell 1, the recessed portion 402 is provided with a mounting hole, an electrode terminal 7 is connected to the mounting hole through an insulating seal 8, and the electrode terminal 7 is electrically connected to a positive electrode of the electrode set 2.

Compared to existing independent sealing and insulating members, the battery in the embodiments of the present application integrates a sealing member and an insulating member into a single structural member, which not only improves the sealing and insulating performance, but also reduces the quantity of components, simplifies the assembly process, greatly lowers battery costs, and improves product competitiveness.

In an optional implementation, the positive electrode cover plate 4 further includes a raised portion 403 away from the electrode set 2, the raised portion 403 is arranged around the recessed portion 402, an inner ring of the raised portion 403 is connected to the recessed portion 402, and an outer ring of the raised portion 403 is connected to the positive electrode cover plate body 401; the raised portion 403 is provided with an explosion-proof valve 5, and the negative electrode cover plate 3 is provided with an injection hole 6.

Specifically, end surfaces of the positive electrode cover plate body 401, the recessed portion 402, and the raised portion 403 are all not flush. Such design can increase the structural strength of the positive electrode cover plate 4.

Specifically, the explosion-proof valve 5 is arranged on the raised portion 403, and the injection hole 6 is arranged on the negative electrode cover plate 3, that is, the explosion-proof valve 5 and the injection hole 6 are separately arranged on different end surfaces. When the explosion-proof valve 5 leads to electrolyte leakage due to breakdown, contamination of the injection hole 6 can be avoided, thereby improving product assembly yield and lowering product costs.

In an optional implementation, an edge of the positive electrode cover plate 4 is flush with an edge of the shell 1, and a periphery of the positive electrode cover plate 4 is welded to a periphery of the shell 1.

In an optional implementation, the electrode terminal 7 includes an electrode terminal body 701, a first protruding edge 702 located at an outer end of the electrode terminal body 701 and extending radially, and a second protruding edge 703 located at an inner end of the electrode terminal body 701 and extending radially, where the electrode terminal body 701 is fitted into the mounting hole, the first protruding edge 702 is arranged on an outer end surface of the mounting hole, and the second protruding edge 703 is arranged on an inner end surface of the mounting hole. The insulating seal 8 includes a plurality of sealing segments, the sealing segments are alternately arranged radially and axially, and the sealing segments are correspondingly arranged between the first protruding edge 702 and the outer end surface of the mounting hole, between the electrode terminal body 701 and an inner wall of the mounting hole, and between the second protruding edge 703 and the inner end surface of the mounting hole.

On the one hand, the sealing segments are alternately arranged radially and axially to form a sinuous labyrinth sealing structure, with better sealing effect. On the other hand, the insulating seal 8 insulates and hermetically connects the electrode terminal 7 and the positive electrode cover plate 4, i.e., integrates independent insulating and sealing members in related technologies, thereby reducing the quantity of components, simplifying the assembly process, and improving the production efficiency of the battery.

In an optional implementation, the insulating seal 8 includes a first sealing segment 801 and a second sealing segment 802, both the first sealing segment 801 and the second sealing segment 802 extend axially, the first sealing segment 801 is arranged on an outer side of the mounting hole, the second sealing segment 802 is arranged on an inner side of the mounting hole, the first sealing segment 801 at least partially covers the first protruding edge 702 radially, and the second sealing segment 802 at least partially covers the second protruding edge 703 radially. Such design can ensure insulation between the electrode terminal 7 and the positive cover plate 4 and increase a creepage distance. It should be noted that the "outer end" refers to an end away from the electrode set 2, and the "outer side" refers to a side away from electrode set 2. Similarly, the "inner end" refers to an end close to the electrode set 2, and the "inner side" refers to a side close to the electrode set 2.

In an optional implementation, as shown in FIG. 1, the positive electrode cover plate 4 is provided with the raised portion 403, the first sealing segment is arranged between the raised portion 403 and the first protruding edge, and side walls of the raised portion 403 can limit the insulating seal 8, thereby improving connection stability of the insulating seal 8.

In an optional implementation, as shown in FIG. 1, the insulating seal 8 includes a third sealing segment 803 extending radially, the third sealing segment 803 is connected to the first sealing segment 801, and the third sealing segment 803 is compressed between the first protruding edge 702 and the recessed portion 402.

In an optional implementation, the electrode terminal 7 is conductively connected to the positive terminal of the electrode set 2 through a positive electrode connecting piece 9.

According to the embodiments of the present application, in another aspect, a battery pack is further provided, including the battery in any one of the above technical solutions.

The battery pack including the aforementioned battery has the same effect as the battery. Details will not be repeated here.

Although the embodiments of the present application are described in conjunction with the drawings, a person skilled in the art may make various modifications and variations without departing from the spirit and scope of the present application, and such modifications and variations fall within the scope defined by the appended claims.

### Industrial Applicability

According to the battery provided in the present application, when the electrode set has a large manufacturing error in height, the elastic rib surface can compensate for the height of the electrode set to compensate for low height accuracy of the electrode set, thereby increasing product processing flexibility and improving product yield and performance. The electrode set is electrically connected to at least a portion of the elastic rib surface, thereby canceling a negative electrode connecting piece, reducing the quantity of components, greatly lowering product costs, simplifying an assembly process, and improving production efficiency, and achieving high market competitiveness.

## Claims

1. A battery, comprising:
a shell comprising a bottom wall located at one end, wherein the bottom wall comprises a bottom wall body and an elastic rib surface recessed inward from the bottom wall body;
an electrode set arranged in the shell, wherein the electrode set is electrically connected to at least a portion of the elastic rib surface, and the elastic rib surface is suitable for elastic deformation along a height direction of the electrode set; and
a negative electrode cover plate arranged on the elastic rib surface, wherein the electrode cover plate is connected to the shell.

2. The battery as claimed in claim 1, wherein the elastic rib surface comprises at least two welding zones and at least two isolation zones, the welding zones and the isolation zones are alternately arranged around a center of the electrode set, and the welding zones are welded to the electrode set in a penetrating manner.

3. The battery as claimed in claim 2, wherein a ratio of an area of the welding zones to an area of a bottom surface of the electrode set is not less than 2/5.

4. The battery as claimed in claim 2 or 3, wherein the isolation zones are through holes that penetrate through the elastic rib surface.

5. The battery as claimed in claim 2 or 3, wherein the shell is cylindrical, the elastic rib surface is annular, the welding zones are sector-shaped zones centered on the elastic rib surface, and the welding zones are uniformly spaced around the center of the elastic rib surface.

6. The battery as claimed in any one of claims 1 to 3, wherein a deformation range of the elastic rib surface along the height direction of the electrode set is -0.3 mm to 0.3 mm.

7. The battery as claimed in any one of claims 1 to 3, wherein the elastic rib surface and the bottom wall of the shell are integrally formed.

8. The battery as claimed in any one of claims 1 to 3, further comprising a positive electrode cover plate, wherein the positive electrode cover plate comprises a positive electrode cover plate body and a recessed portion located in the middle of the positive electrode cover plate body and facing towards the electrode set, a periphery of the positive electrode cover plate body is welded to a periphery of the other end of the shell, the recessed portion is provided with a mounting hole, an electrode terminal is connected to the mounting hole through an insulating seal, and the electrode terminal is electrically connected to a positive electrode of the electrode set.

9. The battery as claimed in claim 8, wherein the positive electrode cover plate further comprises a raised portion away from the electrode set, the raised portion is arranged around the recessed portion, an inner ring of the raised portion is connected to the recessed portion, and an outer ring of the raised portion is connected to the positive electrode cover plate body; the raised portion is provided with an explosion-proof valve, and the negative electrode cover plate is provided with an injection hole.

10. A battery pack, comprising two batteries as claimed in one of claims 1 to 9.
